# EUROPÄISCHE PATENTSCHRIFT

(11) **EP 1 307 405 B1**
(45) Veröffentlichungstag und Bekanntmachung des Hinweises auf die Patenterteilung: **02.11.2005**
(21) Anmeldenummer: 01971764.4
(22) Anmeldetag: 11.07.2001
(51) Int. Cl.: C02F 1/44, C02F 9/00, C02F 3/08, C02F 3/10

(54) **VERFAHREN UND VORRICHTUNG ZUR BEHANDLUNG VON WÄSCHEREIABWÄSSERN**
METHOD AND DEVICE FOR TREATING WASTE WATER FROM LAUNDERETTES
PROCEDE ET DISPOSITIF DE TRAITEMENT D'EAUX USEES PROVENANT DE LAVERIES

(30) Priorität: 11.07.2000 DE 10033513
(43) Veröffentlichungstag der Anmeldung: 07.05.2003
(73) Patentinhaber: Textil-Service Klingelmeyer GmbH & Co. KG, 64297 Darmstadt (DE)
(72) Erfinder: SCHEIBNER, Ralf, 76185 Karlsruhe (DE); HOINKIS, Jan, 76199 Karlsruhe (DE); KLINGELMEYER, Günter, 64367 Mühltal (DE)
(74) Vertreter: Lasch, Hartmut
(86) Internationale Anmeldenummer: PCT/EP2001/007976
(87) Internationale Veröffentlichungsnummer: WO 2002/004354

(56) Entgegenhaltungen:
- EP-A- 0 995 483
- DE-U- 29 606 930
- US-A- 5 868 937
- PATENT ABSTRACTS OF JAPAN vol. 1999, no. 09, 30. Juli 1999 (1999-07-30) & JP 11 104697 A (TEIJIN LTD), 20. April 1999 (1999-04-20)

## Beschreibung

Die Erfindung betrifft ein Verfahren und eine Vorrichtung zur Behandlung und insbesondere zur Reinigung von Wäschereiabwässern.

Zur Behandlung von Wasch- und Spülwässern gewerblicher Wäschereien werden herkömmlich Fällungs- und Flockungsverfahren, Membranverfahren sowie biologische Verfahren eingesetzt. Erstgenannte erfordern einerseits den Einsatz von Chemikalien, wie Eisen- und Aluminiumsalzen, welche sich insbesondere bei einer Zirkulation des Wäschereiabwassers im Wasserkreislauf anreichern. Andererseits fallen bei der Fällung und Flockung erhebliche Mengen an Schlämmen an, deren Entsorgung aufwendige und teuere Abtrennungs- und Trocknungsverfahren erfordern. Darüber hinaus entstehen beträchtliche Deponierungskosten.

Wenn Membranverfahren, wie Mikro-, Nano- oder Ultrafiltrationsverfahren zur Wäschereiabwasserreinigung eingesetzt werden, so machen diese zwar den Einsatz von Chemikalien weitgehend entbehrlich, doch sind reine Membranverfahren aufgrund der erforderlichen Betriebsdrucke teuer und es fallen ebenfalls erhebliche Mengen an aufkonzentrierten Schlämmen an, die entsorgt werden müssen. Eine Verblockung (Fouling) der Membranen, welche häufig auftreten kann, erfordert wiederum den Einsatz von Chemikalien zur Reinigung der Membran.

Die in der Regel unter aeroben Bedingungen durchgeführten biologischen Verfahren zur Wäschereiabwasserbehandlung bieten den Vorteil einer im wesentlichen vollständigen Entfernung der biologisch abbaubaren, organischen Wasserinhaltsstoffe, wobei der entstehende Überschußschlamm üblicherweise verhältnismäßig kostengünstig entsorgt werden kann. Nachteilig ist, daß die der biologischen Verfahrensstufe nachgeschalteten Einrichtungen zur Schlammabtrennung einen hohen Raumbedarf und Investitionsaufwand erfordern. Im Falle des Einsatzes von Nachklärbecken lassen sich zudem nur leicht sedimentierbare Stoffe abscheiden, was zur Folge hat, daß Schwebstoffe in den Ablauf gelangen. Im Falle einer konventionellen Filtration, beispielsweise durch Sand- oder Kiesfilter, werden Schwebstoffe und Keime zwar weitestgehend zurückgehalten, doch gewähren sie keine Rückhaltung der Keime. Desweiteren neigen solche Filtrationseinrichtungen mit fortwährender Betriebsdauer zur Verstopfung und müssen daher häufig rückgespült werden. In jedem Fall erfordert eine Rückführung der Wässer zum Einsatz als Waschwasser einen hohen Entkeimungsaufwand in Form einer Ozonung oder Chlorung. Ein solcher Entkeimungsaufwand wird durch den Einsatz von der biologischen Verfahrensstufe nachgeschalteten Membrantrennstufen zwar vermieden, da diese auch Keime weitestgehend zurückhalten, jedoch sind diese, wie bereits erwähnt, aufgrund der hohen Betriebsdrucke sowohl apparativ aufwendig als auch energieintensiv.

Beim Einsatz von Membranverfahren zur Aufbereitung von wäschereiabwasser ist es bekannt, daß nur membrangängige Waschmittelrezepturen verwendet werden können. So führen insbesondere die als Gerüststoffe (auch Builder genannt) eingesetzten Natriumaluminiumsilicate (Zeolithe) und Metasilicate zu Membranverblockungen. Deshalb werden beim Einsatz von Membranen zur Abwasseraufbereitung in Wäschereien typischerweise anorganische Phosphate, vorwiegend Pentanatriumtriphosphat eingesetzt. Diese Gerüststoffe führen nicht zu Membranverblockungen, sie haben jedoch den Nachteil, daß sie beim Waschprozess und insbesondere auch in biologischen Reinigungsanlagen zu sogenannten Orthophosphatsalzen (PO₄³⁻) zerfallen. Diese haben keine waschaktive Wirkung mehr, tragen aber im Recyclingprozess maßgeblich zur Aufsalzung bei und müssen deshalb ausgeschleust und entsorgt werden. Es ist bekannt, daß Orthophosphat, wenn es im Übermaß in die Gewässer gelangt, umweltschädigend ist, da es zu einer starken Überdüngung (Eutrophierung) führt. Aus diesem Grund werden beispielsweise in Haushaltswaschmitteln keine Phosphate mehr eingesetzt, da sie in den kommunalen Kläranlagen aufwendig mit Eisen- oder Aluminiumsalzen gefällt werden müssen.

Der Erfindung liegt daher die Aufgabe zugrunde, ein effektives und kostengünstige Verfahren zur Behandlung von Wäschereiabwässern sowie eine Vorrichtung zur Durchführung eines solchen Verfahrens vorzuschlagen.

Erfindungsgemäß wird der verfahrenstechnische Teil dieser Aufgabe bei einem Verfahren der eingangs genannten Art gelöst, indem das bei einer Reinigung anfallenden Abwasser mittels wenigstens einer Klassiereinrichtung von groben Feststoffpartikeln und mittels eines dieser nachgeschalteten Biomembranreaktors sowohl von ungelösten als auch von biologisch abbaubaren, gelösten Inhaltsstoffen befreit und ein Teilstrom des Ablaufs des Biomembranreaktors zum Einsatz als Waschwasser für die Reinigung über eine 1. Leitung zur Wäscherei rezirkuliert wird, wobei, daß ein 2. Teilstrom des Ablaufs des Biomembranreaktors mittels Membranmodulen entsalzt und über eine 2. Leitung zur Wäscherei rezirkuliert wird.

Zur Lösung der genannten Aufgabe sieht die Erfindung bei einer Vorrichtung zur Reinigung von Wäschereiabwässern weiterhin eine Klassiereinrichtung zur Abtrennung von groben Feststoffpartikeln aus dem bei dem Waschprozeß anfallenden Abwasser, einen dieser nachgeschalteten Biomembranreaktor zur Elimination sowohl von ungelösten als auch von biologisch abbaubaren, gelösten Wasserinhaltsstoffen und einer 1. Rückführungsleitung zur Rückführung eines 1. Teilstroms des Ablaufs des Biomembranreaktors zur Wäscherei zum Einsatz als Waschwasser für die Reinigung, wobei, eine 2. Rückführungsleitung vorgesehen ist, mit der ein 2. Teilstrom des Ablaufs des Biomembranreaktors zur Wäscherei rückführbar ist, wobei in der 2. Rückführungsleitung Membranmodule (23) zur Entsalzung des 2. Teilstroms des rezirkulierten Wassers angeordnet sind. Dabei ist der Biomembranreaktor als erste Stufe vorgesehen, in der das Wasser zur Qualität "Waschwasser" aufbereitet wird, wobei sich eine Membranfiltrationsanlage (Nanofiltration NF oder Umkehrosmose UO) als zweite Stufe anschließt, in der ein Teilstrom des Wassers zur Qualität "Spülwasser" aufbereitet wird.

Durch die erfindungsgemäße Ausgestaltung wird das bei der Reinigung anfallende Abwasser mittels der Klassiereinrichtung zunächst von groben Feststoffpartikeln, wie Fasern, Flusen oder dergleichen, befreit und anschließend in den dieser nachgeschalteten Biomembranreaktor überführt. Dieser stellt eine insbesondere unter aeroben Bedingungen betriebene, kompakte biologische Reinigungsstufe mit integrierter Schlammabtrennung in Form von Membranmodulen dar. Durch den Einsatz des Biomembranreaktors erfordert die biologische Reinigungsstufe nur verhältnismäßig geringe Behältervolumina bei einer hohen Biomassenkonzentration, was in einem geringen Energieverbrauch während des Betriebs und in einer weitestgehenden Beseitigung biologisch abbaubarer Wasserinhaltsstoffe resultiert. Aufgrund des hohen Schlammalters erfolgt im Bioreaktor auch eine weitgehende Nitrifikation von biologisch abbaubaren Stickstoffverbindungen. Eine Denitrifikation kann in einem abgetrennten Teil des Behälters unter anoxischen Bedingungen oder in einem gesonderten Denitrifikationsbehälter erfolgen. Das aus dem Biomembranreaktor abgeführte Permeat ist weitestgehend keimfrei, so daß eine nachträgliche Entkeimung entbehrlich gemacht wird oder der Aufwand für eine solche gering ist. Der Betrieb des Biomembranreaktors ermöglicht ein hohes Schlammalter, wobei ein Anfallen von Überschußschlamm durch Einstellen eines optimalen Betriebspunktes auf ein Minimum reduziert werden kann.

Durch die Teilrezirkulation des Ablaufs des Biomembranreaktors werden die biologisch nicht oder schwer abbaubare Waschmittelinhaltsstoffe, z.B. optische Aufheller, Builder oder Elektrolytsalze, welche die Membran passieren können, erneut im Waschprozeß eingesetzt, so daß sich deren Ersatz auf ein Minimum reduziert.

Durch die Behandlung des restlichen Teilstroms des Biomembranreaktorablaufs mittels Membranfiltration (NF oder UO) wird ein Filtrat erhalten, das keine Waschmittelinhaltsstoffe, Keime und nur noch geringe Salzfrachten enthält. Damit wird ein Spülwasser erhalten, das sowohl hinsichtlich der Inhaltsstoffe als auch in hygienischer Hinsicht den Anforderungen des Wäschereiprozesses entspricht und rezirkuliert werden kann.

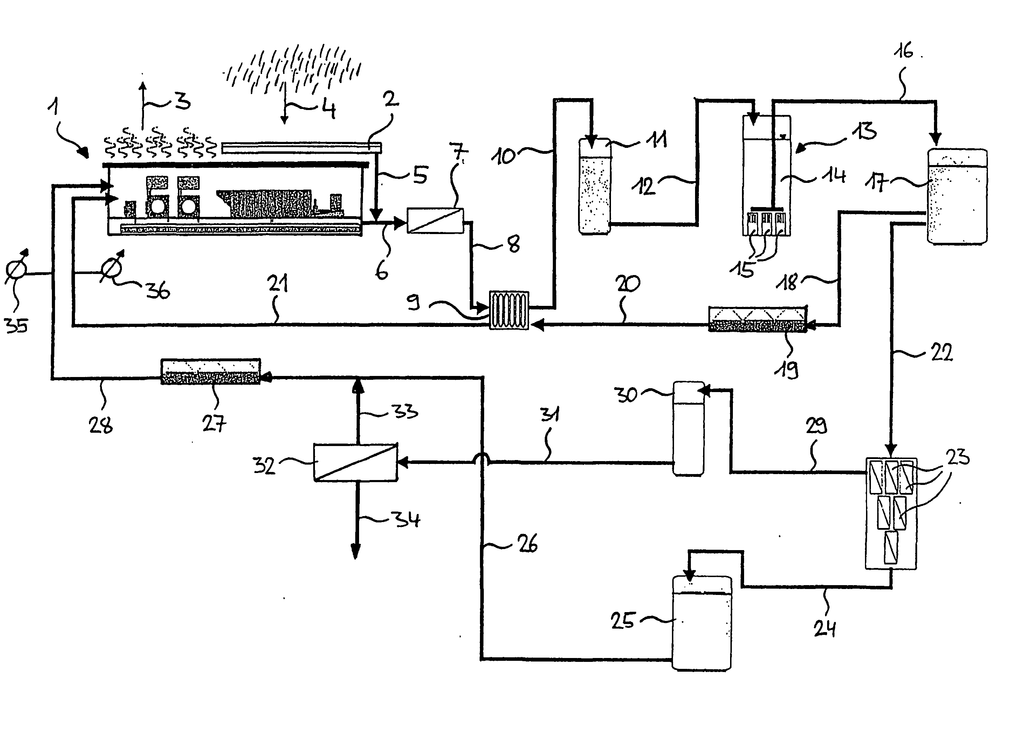

Weitere Vorteile und Merkmale der Erfindung ergeben sich aus den abhängigen Ansprüchen und aus der nachfolgenden Beschreibung einer bevorzugten Ausführungsform unter Bezugnahme auf die Zeichnung. Dabei zeigt die einzige Figur ein Verfahrensfließbild einer Vorrichtung zur Reinigung von Wäschereiabwässern.

Die gezeigte Vorrichtung zur Behandlung bzw. Reinigung von Wäschereiabwässern umfaßt die eigentliche Wäscherei 1, die mit einer Niederschlagswasser-Sammeleinrichtung 2 ausgestattet sein kann, um durch Verdunstung (Pfeil 3) sowie Ausschleusung eines Teilstroms des Wäschereiabwassers verursachte Wasserverluste zu kompensieren. In der gezeigten Ausführung ist die Niederschlagswasser-Sammeleinrichtung 2 nach Art eines Auffangbehälters für Regenwasser (Pfeil 4) ausgebildet und steht über eine Zuführleitung 5 mit einem Ablauf 6 der Wäscherei 1 in Verbindung.

Der Ablauf 6 mündet in eine Klassiereinrichtung 7 in Form eines Feinsiebs mit einer Maschenweite von höchstens 300 µm, z.B. etwa 150 µm, um grobe Feststoffpartikel, wie Fasern, Flusen oder dergleichen, abzuscheiden. Alternativ oder zusätzlich können als Klassiereinrichtungen 7 beispielsweise Hydrozyklone oder Absatzbecken (nicht gezeigt) vorgesehen sein. Die Klassiereinrichtung 7 ist über eine Leitung 8 mit einem Wärmetauscher 9 zum Erwärmen eines Teilstroms des rezirkulierten Wassers durch die Wärme des bei der Reinigung anfallenden Abwassers in der Leitung 8 verbunden. Der Wärmetauscher 9 steht wiederum über eine Leitung 10 mit einem Wassersammeltank 11 in Verbindung, der über eine Leitung 12 in einen Biomembranreaktor 13 mündet. Der Wärmetauscher kann wahlweise auch im Wassersammeltank 11 eingebaut oder als Kühlschlangen im Mantel des Tanks plaziert werden.

Der Biomembranreaktor 13 umfaßt einen Belebtschlammbehälter 14 mit einer Biomassenkonzentration von beispielsweise etwa 20 g/l. In dem Belebtschlammbehälter sind unterhalb der Wasseroberfläche getauchte Mikro- oder Ultrafiltrationsmodule 15 angeordnet, die den Ablauf des Biomembranreaktors 13 bilden. Die Mikrofiltrationsmodulen 15 können z.B. als Rohr-, Kapillarrohr-, Platten-, Hohlfasermodule, Wickelmodule oder in Form beliebiger anderer bekannter Membranmodule ausgebildet sein. Alternativ können die Filtrationsmodule 15 dem Belebtschlammbehälter 14 auch nachgeschaltet sein.

Dem Biomembranreaktor 13 ist über eine Leitung 16 ein Speichertank 17 nachgeordnet, der über eine Abzweigleitung 18 mit einer Entkeimungseinrichtung 19 in Form einer Bestrahlungseinrichtung mittels hochfrequenter elektromagnetischer Strahlung, insbesondere UV-C-Strahlung, verbunden ist, die wiederum über eine Leitung 20, den Wärmetauscher 9 und eine Leitung 21 mit der Wäscherei 1 zur Rezirkulation eines Teilstroms des Wasser aus dem Speichertank 17 in Verbindung steht.

Eine weitere Abzweigleitung 22 des Speichertanks 17 verbindet diesen mit Membranmodulen 23, die eine kleinere Porenweite als die Membranmodule 15 des Biomembranreaktors 13 aufweisen und z.B. als Nanofiltrations- oder Umkehrosmosemodule in Form von Rohr-, Hohlfaser-, Kapillarrohr-, Platten-, Wickelmodulen oder dergleichen ausgebildet sind. Die Membranmodule 23 sind derart konzipiert, daß sie organische Substanzen sowie aufsalzende anorganische und organische Stoffe und Keime zurückhalten. Zum Ausschleusen dieser Stoffe ist eine in einen Abwassersammeltank 30 mündende Abführleitung 29 und eine den Abwassersammeltank 30 mit einer Verdampfungseinrichtung 32 verbindende Leitung 31 vorgesehen. Die Verdampfungseinrichtung 32 dient zur Rückgewinnung zumindest eines Teils des Wassers des bei der Entsalzung mittels der Membranmodule 23 erhaltenen Konzentrates und weist hierfür eine Rückführleitung 33 sowie eine Abwasserleitung 34 zum Ausschleusen des eingeengten Konzentrats auf. An die Abwasserleitung 34 können sich gegebenenfalls herkömmliche Aufbereitungsstufen (nicht dargestellt), wie Oxidations-, Flockungs-, Fällungs-, Denitrifikationsstufen oder dgl. anschließen.

Zur Rezirkulation des Permeates der Membranmodule 23 in die Wäscherei 1 sind Leitungen 24, 26, 28 vorgesehen, in denen ein Speichertank 25 sowie gegebenenfalls eine weitere Entkeimungseinrichtung 27 in Form einer Bestrahlungseinrichtung angeordnet sind.

In dem Speichertank 17 und/oder dem Speichertank 25 kann eine oberflächliche Bestrahlung mit UV-C-Strahlen zur Keimfreihaltung der Oberfläche vorgesehen sein, wobei die Bestrahlungsleistung der Strahler im Speichertank 17 gegebenenfalls größer als bei dem Speichertank 25 sein sollte.

Die Vorrichtung weist ferner Meßeinrichtungen 35, 36, z.B. Leitfähigkeitsmeßeinrichtungen, zur Ermittlung des Elektrolytgehalts auf, wobei die Meßeinrichtung 36 gegebenenfalls zusätzliche Meßgeräte zur Ermittlung der Konzentration von Waschmittelinhaltsstoffen im rezirkulierten Teilstrom für das Waschwasser umfaßt. Die Meßeinrichtung 36 korrespondiert mit einer (nicht dargestellten) Dosiereinrichtung zur Nachdosierung der Waschmittel sowie Zusatzstoffe.

Nachfolgend ist die Wirkungsweise der gezeigten Vorrichtung näher erläutert.

Das in der Wäscherei 1 anfallende Abwasser wird mittels der Klassiereinrichtung 7 von groben Feststoffpartikeln, wie Fasern, Flusen oder dergleichen, befreit, indem diese mechanisch abgetrennt werden. Über Leitungen 8, 10, 12 wird das Wäschereiabwasser nach Abkühlen desselben mittels des Wärmetauschers 9 in den Biomembranreaktor 13 überführt. Im Belebtschlammbehälter 14 des Biomembranreaktors 13 werden im Wäschereiabwasser enthaltene Fette, Eiweiße, Kohlenhydrate und dergleichen im wesentlichen vollständig zu Kohlendioxid und Wasser mineralisiert und das derart gereinigte Wasser über die unterhalb des Wasserspiegels des Belebtschlammbehälters 14 angeordneten Mikrofiltrationsmodule 15 dem Biomembranreaktor 13 entnommen, wobei die Biomasse von den Membranmodulen 15 im Behälter 14 zurückgehalten wird. Der Biomembranreaktor 13 ermöglicht eine hohe Biomassenkonzentration von bis zu etwa 30 g Trockensubstanz pro 1 und bietet neben einer kompakten Bauweise eine hohe Sicherheit gegen Belastungsstöße. Durch die Mikrofiltrationsmodule ist der Ablauf fettstofffrei und von allen ungelösten Inhaltsstoffen befreit. Weiterhin ist der Energiebedarf für den Betrieb der Membranen, welcher mittels Unterdruck auf der Filtratseite der Membranen 15 erfolgt, im Vergleich zu herkömmlichen Membranverfahren gering und beträgt etwa 0,03 bis 1,15 kWh/m³ Filtrat. Die aufgrund des Biomembranreaktors 13 bewirkte weitestgehende Keimfreiheit des Ablaufs 16 in der Leitung erfordert lediglich eine Bestrahlung des in den Leitungen 18, 20, 21 rezirkulierten Teilstroms mit hochfrequenter elektromagnetischer Strahlung mittels der Bestrahlungseinrichtung 19 und macht eine chemische Entkeimung, z.B. durch Chlorung oder Ozonung, entbehrlich, so daß hierbei insbesondere keine aufsalzenden oder toxischen Substanzen, wie an Aktivkohle adsorbierbare organische Halogenverbindungen (AOX), gebildet werden.

Ein weiterer Teilstrom des Ablaufs des Biomembranreaktors 13 wird mittels der Membranmodule 23 entsalzt, wobei insbesondere die im Biomembranreaktor 13 durch Mineralisierung gebildeten Salze abgetrennt werden. Als Membranmodule kommen vornehmlich Umkehrosmose- oder Nanofiltrationsmodule in Frage, die eine geringere Porengröße als die Mikrofiltrationsmodule 15 des Biomembranreaktors 13 aufweisen und die diese passierenden Salze zurückhalten. Vorzugsweise werden mittels der Membranmodule 23 höchstens 10 Mass.-% des insgesamt anfallenden Abwassers ausgeschleust, wobei zumindest ein Teil des Wassers des Konzentrates mittels der Verdampfungseinrichtung 32 über die Leitung 33 dem Teilstrom 26 wieder zugeführt wird. Die bei der Nanofiltration oder Umkehrosmose anfallenden, geringe Mengen an Konzentraten enthalten beispielsweise aufsalzende anorganische und organische Stoffe, welche nach Rückgewinnung zumindest eines Teils des im Konzentrat enthaltenen Wassers mittels der Verdampfungseinrichtung 32 gegebenenfalls durch Oxidation, Fällung, Flockung, Denitrifikation oder dergleichen nachbehandelt werden können, so daß das Konzentrat über die Leitung 34 unter Einhaltung der Grenzwerte der Abwasserverordnung direkt oder indirekt in Gewässer eingeleitet werden kann. Zur Eindampfung des Konzentrates wird vorzugsweise die in der Wäscherei 1 erzeugte Abwärme verwendet. Das Permeat der Membranmodule 23 wird wiederum gegebenenfalls mittels der Entkeimungseinrichtung 27 mit hochfrequenter elektromagnetischer Strahlung bestrahlt und rezirkuliert.

Als waschaktive Substanzen bzw. Tenside sowie Zusatzstoffe, werden insbesondere solche eingesetzt, welche biologisch gut abbaubar sind, so daß sie von den Mikroorganismen im Biomembranreaktor 13 zu einem großen Teil mineralisiert werden, wobei die gebildeten Salze durch die Nano- bzw. Umkehrosmosemodule 23 im wesentlichen ausgeschleust werden, um eine Aufsalzung im gesamten Recyclingsystem zu verhindern. Andererseits sind auch solche Waschmittelinhaltsstoffe von Interesse, die biologisch schwer abbaubar sind, wie beispielsweise optische Aufheller oder Polycarboxylate, so daß sie im Biomembranreaktor 13 nur langsam verstoffwechselt und im Waschwasser rezirkuliert werden. Als Waschmittel für das Recyclingsystem kommen insbesondere flüssige, modular aufgebaute Waschmittelsysteme in Frage. Die eingesetzten Waschmittel sowie Zusatzstoffe passieren nur die Mikrofiltrationsmodule 15 des Biomembranreaktors 13, jedoch nicht die engporigeren Nanofiltrations- oder Umkehrosmosemodule 23, wobei letztere ausschließlich zur Ausschleusung von insbesondere im Biomembranreaktor 13 gebildeten Salzen dienen, die bei einer vollständigen Rezirkulation zu einer Aufsalzung des Wasserkreislaufs führen würden.

Die Konzentration des Elektrolytgehalts der als Wasch- bzw. Spülwasser in den Leitungen 21 und 28 rezirkulierten Teilströme wird mittels der Meßeinrichtungen 35, 36 gemessen. Mit der Meßeinrichtung 36 können zusätzlich die Konzentrationen von eingesetzten Waschmittelinhaltsstoffen gemessen werden, wobei die Meßeinrichtungen 36 wiederum mit der (nicht dargestellten) Dosiereinrichtung verbunden sind, die ein automatisches Nachdosieren dieser Stoffe gewährleistet.

Für die Abwasserrecyclinganlagen wird bevorzugt ein Waschmittel mit folgenden Mengenverhältnissen verwendet, wobei das Waschmittel vorzugsweise als Komponente in flüssiger Form eingesetzt wird (bei Bedarf sind feste Komponenten als wässrige Lösungen anzusetzen):

10 bis 60 Gew.-Teile nichtionische Tenside, 0 bis 5 Gew.-Teile kationische Tenside, 10 bis 25 Gew.-Teile Iminodibernsteinsäure Natriumsalz (Iminodisuccinat Natriumsalz), 5 bis 20 Gew.Teile Polyasparaginsäure und gegebenenfalls weitere übliche Zusatz- und Hilfsstoffe. Zusätzlich wird der Elektrolytgehalt im Waschwasserkreislauf (Leitung 18, 20, 21) mittels einer mit der Meßeinrichtung 36 korrespondierenden Dosiereinrichtung durch Zugabe von Soda (Na₂CO₃) auf eine elektrische Leitfähigkeit von beispielsweise 800 bis 3000 µS/cm gestellt bzw. bei Bedarf durch Zugabe von NaOH auf einen pH-Wert beispielsweise größer als 10 eingestellt.

## Patentansprüche

1. Verfahren zur Behandlung von Wäschereiabwässern, wobei das bei der Reinigung anfallende Abwasser mittels wenigstens einer Klassiereinrichtung (7) von groben Feststoffpartikeln und mittels eines dieser nachgeschalteten Biomembranreaktors (13) sowohl von ungelösten als auch von biologisch abbaubaren, gelösten Inhaltsstoffen befreit und ein 1. Teilstrom des Ablaufs des Biomembranreaktors (13) zum Einsatz als Waschwasser für die Reinigung über eine 1. Leitung (18, 20, 21) zur Wäscherei (1) rezirkuliert wird, **dadurch gekennzeichnet, daß** ein 2. Teilstrom des Ablaufs des Biomembranreaktors mittels Membranmodulen (23) entsalzt und über eine 2. Leitung (24, 26, 28) zur Wäscherei (1) rezirkuliert wird.

2. Verfahren nach Anspruch 1, **dadurch gekennzeichnet, daß** das in den Membranmodulen (23) erhaltene Konzentrat ausgeschleust wird.

3. Verfahren nach Anspruch 2, **dadurch gekennzeichnet, daß** höchstens 10 Mass.-% des insgesamt anfallenden Abwassers ausgeschleust werden.

4. Verfahren nach Anspruch 2 oder 3, **dadurch gekennzeichnet, daß** das ausgeschleuste Konzentrat eingeengt, insbesondere eingedampft wird und das hierbei erhaltene Wasser zum Einsatz als Spülwasser bzw. als Kesselspeisewasser zur Dampferzeugung rezirkuliert wird.

5. Verfahren nach Anspruch 4, **dadurch gekennzeichnet, daß** das Konzentrat mittels Abwärme des bei der Reinigung anfallenden Abwassers eingeengt wird.

6. Verfahren nach einem der Ansprüche 2 bis 6, **dadurch gekennzeichnet, daß** das Konzentrat mittels herkömlicher Aufbereitungsmethoden, wie Oxidation, Flockung, Fällung, Denitrifikation oder dergleichen, behandelt wird.

7. Verfahren nach einem der Ansprüche 1 bis 6, **dadurch gekennzeichnet, daß** das im 1. Teilstrom rezirkulierte Wasser mittels eines Wärmetauschers (9) von dem bei der Reinigung anfallenden Abwasser vorgewärmt wird.

8. Verfahren nach einem der Ansprüche 1 bis 7, **dadurch gekennzeichnet, daß** das im 1. Teilstrom und/oder im 2. Teilstrom rezirkulierte Wasser entkeimt wird.

9. Verfahren nach Anspruch 8, **dadurch gekennzeichnet, daß** das rezirkulierte Wasser mittels hochfrequenter elektromagnetischer Strahlung, insbesondere UV-C-Strahlung, entkeimt wird.

10. Verfahren nach einem der Ansprüche 1 bis 9, **dadurch gekennzeichnet, daß** die Konzentration der eingesetzten Waschmittel sowie Zusatzstoffe gemessen wird und die genannten Stoffe bei Bedarf nachdosiert werden.

11. Verfahren nach Anspruch 10, **dadurch gekennzeichnet, daß** der Elektrolytgehalt des Waschwassers durch Leitfähigkeitsmessung ermittelt wird.

12. Verfahren nach einem der Ansprüche 1 bis 11, **dadurch gekennzeichnet, daß** zumindest ein Teil des Prozeßwassers aus Niederschlagswasser gewonnen wird.

13. Vorrichtung zur Reinigung von Wäschereiabwässern, insbesondere zur Durchführung des Verfahrens nach einem der Ansprüche 1 bis 12, mit wenigstens einer Klassiereinrichtung (7) zur Abtrennung von groben Feststoffpartikeln aus dem bei der Reinigung anfallenden Abwasser, einem dieser nachgeschalteten Biomembranreaktor (13) zur Elimination sowohl von ungelösten als auch von biologisch abbaubaren, gelösten Wasserinhaltsstoffen und einer 1. Rückführungsleitung (18, 20, 21) zur Rückführung eines 1. Teilstroms des Ablaufs des Biomembranreaktors (13) zur Wäscherei (1) zum Einsatz als Waschwasser für die Reinigung, **dadurch gekennzeichnet, daß** eine 2. Rückführungsleitung (24, 26, 28) vorgesehen ist, mit der ein 2. Teilstrom des Ablaufs des Biomembranreaktors (13) zur Wäscherei (1) rückführbar ist, wobei in der 2. Rückführungsleitung (24, 26, 28) Membranmodule (23) zur Entsalzung des 2. Teilstroms des rezirkulierten Wassers angeordnet sind.

14. Vorrichtung nach Anspruch 13, **dadurch gekennzeichnet, daß** der Biomembranreaktor (13) einen Belebtschlammbehälter (14) mit in diesem angeordneten, den Ablauf (16) des Biomembranreaktors (13) bildenden Mikro- bzw. Ultrafiltrationsmodulen (15) aufweist.

15. Vorrichtung nach Anspruch 13, **dadurch gekennzeichnet, daß** der Biomembranreaktor (13) einen Belebtschlammbehälter (14) mit daran angeschlossenen, den Ablauf (16) des Biomembranreaktors (13) bildenden Mikro bzw. Ultrafiltrationsmodulen (15) aufweist.

16. Vorrichtung nach einem der Ansprüche 13 bis 15, **dadurch gekennzeichnet, daß** die Klassiereinrichtung (7) ein Feinsieb mit einer Maschenweite von höchstens 300 µm ist.

17. Vorrichtung nach einem der Ansprüche 13 bis 16, **dadurch gekennzeichnet, daß** die Klassiereinrichtung (7) ein Hydrozyklon ist.

18. Vorrichtung nach einem der Ansprüche 13 bis 17, **dadurch gekennzeichnet, daß** die Klassiereinrichtung (7) ein Absetzbecken ist.

19. Vorrichtung nach einem der Ansprüche 13 bis 18, **dadurch gekennzeichnet, daß** das mittels der Membranmodule (23) erhaltenen Konzentrat ausschleusbar ist.

20. Vorrichtung nach Anspruch 19, **dadurch gekennzeichnet, daß** die Membranmodule (23) eine kleinere Porenweite als die Mikrofiltrationsmodule (15) des Biomembranreaktors (13) aufweisen.

21. Vorrichtung nach Anspruch 19 oder 20, **dadurch gekennzeichnet, daß** die Membranmodule (23) Nanofiltrations- und/oder Umkehrosmosemodule sind.

22. Vorrichtung nach einem der Ansprüche 19 bis 21, **dadurch gekennzeichnet, daß** den Membranmodulen (23) eine Verdampfungseinrichtung (32) zur Rückgewinnung zumindest eines Teils des Wassers des bei der Entsalzung erhaltenen Konzentrates nachgeordnet ist.

23. Vorrichtung nach Anspruch 22, **dadurch gekennzeichnet, daß** die Verdampfungseinrichtung (32) durch Abwärme des Produktionsprozesses der Wäscherei betrieben ist.

24. Vorrichtung nach einem der Ansprüche 13 bis 23, **dadurch gekennzeichnet, daß** wenigstens ein Wärmetauscher (9) zum Erwärmen zumindest eines Teilstroms (21) des rezirkulierten Wassers durch die Wärme des bei der Reinigung anfallenden Abwassers vorgesehen ist.

25. Vorrichtung nach einem der Ansprüche 13 bis 24, **dadurch gekennzeichnet, daß** wenigstens eine Entkeimungseinrichtung (19,27) für das rezirkulierte Wasser vorgesehen ist.

26. Vorrichtung nach Anspruch 25, **dadurch gekennzeichnet, daß** die Entkeimungseinrichtung (19,27) eine Bestrahlungseinrichtung mittels hochfrequenter elektromagnetischer Strahlung, insbesondere UV-C-Strahlung, ist.

27. Vorrichtung nach einem der Ansprüche 13 bis 26, **dadurch gekennzeichnet, daß** wenigstens eine Meßeinrichtung (35,36) zur Ermittlung der Konzentration der eingesetzten Waschmittel sowie Zusatzstoffen vorgesehen ist.

28. Vorrichtung nach Anspruch 27, **dadurch gekennzeichnet, daß** eine Leitfähigkeitmeßeinrichtung vorgesehen ist.

29. Vorrichtung nach Anspruch 27 oder 28, **dadurch gekennzeichnet, daß** eine mit der Meßeinrichtung (35,36) korrespondierende Dosiereinrichtung zur Nachdosierung von Waschmitteln sowie Zusatzstoffen vorgesehen ist.

30. Vorrichtung nach einem der Ansprüche 13 bis 29, **dadurch gekennzeichnet, daß** eine Niederschlagswassersammeleinrichtung (2) zur Gewinnung wenigstens eines Teils des Prozeßwassers vorgesehen ist.

## Claims

1. Method for the treatment of waste water from laundries, in which the waste water occurring during cleaning is freed by means of at least one classifier (7) from coarse solid particles and by means of a biomembrane reactor (13) downstream thereof is freed both from undissolved and biodegradable, dissolved constituents and a first partial flow of the discharge of the biomembrane reactor (13) is recycled to the laundry (1) for use as washing water for cleaning by means of a first line (18, 20, 21), **characterized in that** a second partial flow of the biomembrane reactor discharge is desalinated by means of membrane modules (23) and recycled to the laundry (1) by means of a second line (24, 26, 28).

2. Method according to claim 1, **characterized in that** the concentrate obtained in the membrane modules (23) is discharged.

3. Method according to claim 2, **characterized in that** a maximum of 10 wt.% of the total waste water obtained is discharged.

4. Method according to claim 2 or 3, **characterized in that** the discharge concentrate is reduced by evaporation and in particular evaporated and the water obtained is recycled for use as rinsing water or boiler feed water for steam generation purposes.

5. Method according to claim 4, **characterized in that** the concentrate is reduced by evaporation using the waste heat of the waste water obtained during cleaning.

6. Method according to one of the claims 2 to 6, **characterized in that** the concentrate is treated by using conventional treatment methods such as oxidation, flocculation, precipitation, denitrification, etc.

7. Method according to one of the claims 1 to 6, **characterized in that** the water recycled in the first partial flow is preheated by means of a heat exchanger (9) from the waste water obtained during cleaning.

8. Method according to one of the claims 1 to 7, **characterized in that** the water recycled in the first and/or second partial flow is sterilized.

9. Method according to claim 8, **characterized in that** the recycled water is sterilized by high frequency electromagnetic radiation, particularly UV-C radiation.

10. Method according to one of the claims 1 to 9, **characterized in that** the concentration of the detergents used, as well as additives is measured and said substances are subsequently dosed in as needed.

11. Method according to claim 10, **characterized in that** the electrolyte content of the washing water is determined by conductivity measurement.

12. Method according to one of the claims 1 to 11, **characterized in that** at least part of the process water is obtained from condensate water.

13. Apparatus for cleaning waste water from laundries, particularly for performing the method according to one of the claims 1 to 12, with at least one classifier (7) for the separation of coarse solid particles from the waste water obtained during cleaning, a biomembrane reactor (13) downstream thereof for the elimination of both undissolved and biodegradable, dissolved water constituents and a first return line (18, 20, 21) for returning a first partial flow of the outflow of the biomembrane reactor (13) to the laundry (1) for use as washing water for cleaning, **characterized in that** a second return line (24, 26, 28) is provided with which a second partial flow of the outflow of the biomembrane reactor (13) can be returned to the laundry (1), the second return line (24, 26, 28) containing membrane modules (23) for the desalination of the second partial flow of recycled water.

14. Apparatus according to claim 13, **characterized in that** the biomembrane reactor (13) has an activated sludge container (14) with microfiltration and/or ultrafiltration modules (15) forming the outflow (16) of the biomembrane reactor (13) located therein.

15. Apparatus according to claim 13, **characterized in that** the biomembrane reactor (13) has an activated sludge container (14) with microfiltration and/or ultrafiltration modules (15) forming the outflow (16) of the biomembrane reactor (13) connected thereto.

16. Apparatus according to one of the claims 13 to 15, **characterized in that** the classifier (7) is a fine screen with a mesh size of max. 300 µm.

17. Apparatus according to one of the claims 13 to 16, **characterized in that** the classifier (7) is a hydrocyclone.

18. Apparatus according to one of the claims 13 to 17, **characterized in that** the classifier (7) is a settling tank.

19. Apparatus according to one of the claims 13 to 18, **characterized in that** the concentrate obtained by means of the membrane modules (23) can be discharged.

20. Apparatus according to claim 19, **characterized in that** the membrane modules (23) have a smaller pore size than the microfiltration module (15) of the biomembrane reactor (13).

21. Apparatus according to claims 19 or 20, **characterized in that** the membrane modules (23) are nanofiltration and/or reverse osmosis modules.

22. Apparatus according to one of the claims 19 to 21, **characterized in that** the membrane modules (23) are followed by an evaporating device (32) for the recovery of at least part of the water of the concentrate obtained during desalination.

23. Apparatus according to claim 22, **characterized in that** the evaporating device (32) is operated by the waste heat of the laundry production process.

24. Apparatus according to one of the claims 13 to 23, **characterized in that** there is at least one heat exchanger (9) for heating at least a partial flow (21) of the recycled water through the heat of the waste water obtained during cleaning.

25. Apparatus according to one of the claims 13 to 24, **characterized in that** there is at least one sterilizing device (19, 27) for the recycled water.

26. Apparatus according to claim 25, **characterized in that** the sterilizing device (19, 27) is an irradiating device using high frequency electromagnetic radiation, particularly UV-C radiation.

27. Apparatus according to one of the claims 13 to 26, **characterized in that** at least one measuring device (35, 36) is provided for determining the concentration of the detergents used, as well as additives.

28. Apparatus according to claim 27, **characterized in that** a conductivity measuring device is provided.

29. Apparatus according to claim 27 or 28, **characterized in that** a dosing device corresponding to the measuring device (35, 36) is provided for the subsequent dosing of detergents and additives.

30. Apparatus according to one of the claims 13 to 29, **characterized in that** a condensate water collecting device (2) is provided for the recovery of at least part of the process water.

## Revendications

1. Procédé de traitement d'eaux usées de laveries, selon lequel l'eau usée résultant du lavage est débarrassée des particules grossières de matière solide par au moins un dispositif de tri (7) et débarrassée aussi bien des substances non dissoutes que des substances dissoutes biodégradables au moyen d'un bioréacteur à membrane (13) disposé en'aval de celui-ci et selon lequel une première partie du flux sortant du bioréacteur à membrane (13) est remis en circulation dans la laverie (1) pour être utilisée comme eau de lavage pour le nettoyage par l'intermédiaire d'une première conduite (18,20,21), **caractérisé en ce qu'**une deuxième partie du flux sortant du bioréacteur à membrane est déminéralisée au moyen de modules à membrane (23) et remise en circulation dans la laverie (1) par l'intermédiaire d'une deuxième conduite (24,26,28).

2. Procédé selon la revendication 1, **caractérisé en ce que** le concentré contenu dans les modules à membrane (23) est éclusé.

3. Procédé selon la revendication 2, **caractérisé en ce que** 10 % en masse au maximum de la totalité des eaux usées obtenues est éclusé.

4. Procédé selon la revendication 2 ou 3, **caractérisé en ce que** le concentré éclusé est réduit, plus particulièrement évaporé, et **en ce que** l'eau ainsi obtenue est remise en circulation pour être utilisée comme eau de rinçage ou pour alimenter la chaudière en vue de la production de vapeur.

5. Procédé selon la revendication 4, **caractérisé en ce que** le concentré est réduit par la chaleur dissipée des eaux usées résultant du nettoyage.

6. Procédé selon l'une quelconque des revendications 2 à 5, **caractérisé en ce que** le concentré est traité selon des méthodes de traitement traditionnelles telles que l'oxydation, la floculation, la précipitation, la dénitrification ou similaires.

7. Procédé selon l'une quelconque des revendications 1 à 6, **caractérisé en ce que** l'eau remise en circulation dans la première partie du flux est préchauffée au moyen d'un échangeur de chaleur (9) par les eaux usées résultant du nettoyage.

8. Procédé selon l'une quelconque des revendications 1 à 7, **caractérisé en ce que** l'eau remise en circulation dans la première et/ou dans la deuxième partie de flux est stérilisée.

9. Procédé selon la revendication 8, **caractérisé en ce que** l'eau remise en circulation est stérilisée au moyen d'un rayonnement électromagnétique à haute fréquence, en particulier par un rayonnement UV-C.

10. Procédé selon l'une quelconque des revendications 1 à 9, **caractérisé en ce que** l'on mesure la concentration des lessives utilisées ainsi que des additifs et **en ce que** ces substances sont redosées en cas de besoin.

11. Procédé selon la revendication 10, **caractérisé en ce que** la teneur en électrolyte de l'eau de lavage est déterminée par conductométrie.

12. Procédé selon l'une quelconque des revendications 1 à 11, **caractérisé en ce qu'**au moins une partie de l'eau du processus provient de l'eau de pluie.

13. Dispositif de nettoyage d'eau usées de laveries, en particulier pour la réalisation du procédé selon l'une quelconque des revendications 1 à 12, comprenant au moins un dispositif de tri (7) pour l'évacuation des particules grossières de matière solide hors des eaux usées résultant du nettoyage, un bioréacteur à membrane (13) disposé en aval de celui-ci pour l'élimination aussi bien des substances non dissoutes que des substances dissoutes biodégrables contenues dans l'eau, ainsi qu'une première conduite de remise en circulation (18, 20, 21) pour la remise en circulation d'une première partie du flux sortant du bioréacteur à membrane (13) dans la laverie (1) pour son utilisation en tant qu'eau de lavage, **caractérisé en ce que** l'on prévoit une deuxième conduite de remise en circulation (24, 26, 28) au moyen de laquelle on peut remettre en circulation une deuxième partie du flux sortant du bioréacteur à membrane (13) dans la laverie (1), des modules à membrane (23) étant disposés dans la deuxième conduite de remise en circulation (24, 26, 28) pour déminéraliser la deuxième partie de flux de l'eau remise en circulation.

14. Dispositif selon la revendication 13, **caractérisé en ce que** le bioréacteur à membrane (13) présente un réservoir de boue activée (14) dans lequel sont disposés des modules de microfiltration ou de ultrafiltration (15) formant l'écoulement (16) du bioréacteur à membrane (13).

15. Dispositif selon la revendication 13, **caractérisé en ce que** le bioréacteur à membrane (13) présente un réservoir de boue activée (14) auquel sont reliés des modules (15) de microfiltration ou d'ultrafiltration formant l'écoulement (16) du bioréacteur à membrane (13).

16. Dispositif selon l'une quelconque des revendications 13 à 15, **caractérisé en ce que** le dispositif de tri (7) est un tamis fin dont l'ouverture de crible est de 300 µm au maximum.

17. Dispositif selon l'une quelconque des revendications 13 à 16, **caractérisé en ce que** le dispositif de tri (7) est un hydrocyclone.

18. Dispositif selon l'une quelconque des revendications 13 à 17, **caractérisé en ce que** le dispositif de tri (7) est un bassin de décantation.

19. Dispositif selon l'une quelconque des revendications 13 à 18, **caractérisé en ce que** le concentré obtenu au moyen des modules à membrane (23) peut être éclusé.

20. Dispositif selon la revendication 19, **caractérisé en ce que** les modules à membrane (23) présentent une ouverture de pores inférieure à celle des modules de microfiltration (15) du bioréacteur à membrane (13).

21. Dispositif selon la revendication 19 ou 20, **caractérisé en ce que** les modules à membrane (23) sont des modules de nanofiltration et/ou à osmose inverse.

22. Dispositif selon l'une quelconque des revendications 19 à 21, **caractérisé en ce qu'**en aval des modules à membrane (23) est disposé un dispositif d'évaporation (32) pour récupérer au moins une partie de l'eau du concentré obtenu lors de la déminéralisation.

23. Dispositif selon la revendication 22, **caractérisé en ce que** le dispositif d'évaporation (32) est entraîné par la chaleur dissipée du processus de production de la laverie.

24. Dispositif selon l'une quelconque des revendications 13 à 23, **caractérisé en ce que** l'on prévoit au moins un échangeur de chaleur (9) pour réchauffer au moins une partie de flux (21) de l'eau remise en circulation par la chaleur des eaux usées résultant du nettoyage.

25. Dispositif selon l'une quelconque des revendications 13 à 24, **caractérisée en ce que** l'on prévoit au moins un dispositif de stérilisation (19,27) pour l'eau remise en circulation.

26. Dispositif selon la revendication 25, **caractérisé en ce que** le dispositif de stérilisation (19,27) est un dispositif d'exposition à un rayonnement électromagnétique à haute fréquence, en particulier à un rayonnement ultraviolet UV-C.

27. Dispositif selon l'une quelconque des revendications 13 à 26, **caractérisé en ce que** l'on prévoit au moins un dispositif de mesure (35,36) pour déterminer la concentration des lessives utilisées ainsi que des additifs.

28. Dispositif selon la revendication 27, **caractérisé en ce que** l'on prévoit un dispositif de conductométrie.

29. Dispositif selon la revendication 27 ou 28, **caractérisé en ce que** l'on prévoit un dispositif de dosage en relation avec le dispositif de mesure (35,36) pour redoser les lessives ainsi que les additifs.

30. Dispositif selon l'une quelconque des revendications 13 à 29, **caractérisé en ce que** l'on prévoit un dispositif de récupération de l'eau de pluie (2) pour la fourniture d'au moins une partie de l'eau du processus.
